# EUROPEAN PATENT APPLICATION

(11) **EP 4 733 144 A1**
(43) Date of publication of application: **29.04.2026**
(21) Application number: 24825611.7
(22) Date of filing: 15.05.2024
(51) Int. Cl.: B60R 16/04, H01M 50/244, H01M 50/249, H01M 50/289, H01M 50/291

(54) **BATTERY STAND AND WORK MACHINE PROVIDED WITH SAME**

(30) Priority: 22.06.2023 JP 2023102747
(71) Applicant: KUBOTA CORPORATION, Osaka-shi, Osaka 556-8601 (JP)
(72) Inventor: HATTA, Kazuyuki, Sakai-shi, Osaka 590-0908 (JP)
(74) Representative: Cabinet Beau de Loménie
(86) International application number: PCT/JP2024/017974
(87) International publication number: WO 2024/262202

(57) **Abstract**

A battery is easily and firmly secured.

A battery mount (50) includes a placement base (54), a restriction member (55) to restrict rearward movement of the battery (BT), the restriction member (55) being provided at the same side of the battery (BT) as a rear surface of the battery (BT), and a securing assembly (53) to secure the battery (BT), the securing assembly (53) extending from a position above the restriction member (55) or from an upper portion of the restriction member (55) to a forward surface of the battery (BT). The securing assembly (53) includes a first securer (53a) provided at the same side of the battery (BT) as an upper surface of the battery (BT), a second securer (53b) provided at the same side of the battery (BT) as the forward surface of the battery (BT), and a coupler (90) to couple the first securer (53a) and the second securer (53b) to each other. The coupler (90) includes an inclined portion (63) provided in one of the first securer (53a) and the second securer (53b), the inclined portion (63) being inclined in an inclination direction such that a distance between the inclined portion (63) and the rear surface of the battery (BT) decreases in an upward direction, and a retention member (52) to retain a position at which the other of the first securer (53a) and the second securer (53b) is coupled to the inclined portion (63) such that the position relative to the inclined portion (63) is adjustable.

## Description

### Technical Field

The present invention relates to a battery mount to secure a battery to a working machine, and a working machine including the battery mount.

### Background Art

A battery mount disclosed in PTL 1 includes a placement wall, and a restriction member. The placement wall allows selective placement thereon of a first battery and a second battery that are of different mounting configurations. The restriction member is provided to the placement wall to restrict frontward movement of the first battery and the second battery. The restriction member includes a restrictor. The restrictor restricts upward movement of the second battery by engaging a first engagement protrusion provided on a lower forward portion of the second battery.

### Citation List

### Patent Literature

PTL 1: Japanese Unexamined Patent Application Publication No. 2020-004668

### Summary of Invention

### Technical Problem

The battery mount in PTL 1 enables batteries of different mounting configurations to be mounted.

With the battery mount in PTL 1, however, the battery is secured to the battery mount by use of a pair of rod members (a first rod member and a second rod member) and a mounting stay. Accordingly, mounting or removal of the battery to or from the battery mount requires attachment or detachment of the pair of rod members.

The present invention is directed to addressing the problem mentioned above. Accordingly, it is an object of the present invention to provide a battery mount that enables firm and easy securing of a battery, and a working machine including the battery mount.

### Solution to Problem

Technical solution(s) used by the present invention to attain the object mentioned above include characteristic feature(s) described below.

A battery mount according to an example embodiment of the present invention includes a placement base for placement of a battery, a restriction member to restrict rearward movement of the battery, the restriction member being provided at the same side of the battery as a rear surface of the battery, and a securing assembly to secure the battery, the securing assembly extending from a position above the restriction member or from an upper portion of the restriction member to a forward surface of the battery, wherein the securing assembly includes a first securer provided at the same side of the battery as an upper surface of the battery, a second securer provided at the same side of the battery as the forward surface of the battery, and a coupler to couple the first securer and the second securer to each other, and the coupler includes an inclined portion provided in one of the first securer and the second securer, the inclined portion being inclined in an inclination direction such that a distance between the inclined portion and the rear surface of the battery decreases in an upward direction, and a retention member to retain a position at which the other of the first securer and the second securer is coupled to the inclined portion such that the position relative to the inclined portion is adjustable.

The first securer may include one end portion coupled to the position above the restriction member or to the upper portion of the restriction member, and another end portion provided above a forward portion of the battery. The second securer may include one end portion at which the inclined portion of the coupler is provided, and another end portion coupled to the placement base.

The second securer may be bent at an intermediate portion, and a portion of the second securer that extends from the intermediate portion to the one end portion may define the inclined portion extending in the inclination direction.

The restriction member may extend from the placement base to a position higher than the battery. The one end portion of the first securer may be coupled to the upper portion of the restriction member such that the first securer is swingable in an up-down direction. The other end portion of the second securer may be coupled to the placement base such that the second securer is swingable in a front-rear direction of the battery.

The retention member may be configured to move along the inclined portion to change the position at which the other of the first securer and the second securer is coupled to the inclined portion relative to the inclined portion.

The other of the first securer and the second securer may include an inclined surface inclined in a direction crossing the inclination direction. The retention member may be configured to abut the inclined surface to retain the position at which the other of the first securer and the second securer is coupled to the inclined portion relative to the inclined portion.

The inclined portion may include a thread groove. The retention member may include a fastener to be screwed into the thread groove.

The securing assembly may be located inside of the battery on the placement base in a width direction of the battery.

The securing assembly may be a single securing assembly located inside of the battery on the placement base in the width direction of the battery.

The battery mount may further include a clamp member extending between the upper surface of the battery and the first securer and between the forward surface of the battery and the second securer. The clamp member may be configured such that the first securer causes the clamp member to press the upper surface of the battery downward, and the second securer causes the clamp member to press the forward surface of the battery rearward.

The battery mount may further include a force transmission member provided between the securing assembly and the battery to transmit a pressing force exerted by the securing assembly to the battery.

The securing assembly may be configured to directly or indirectly abut an upper forward corner portion of the battery to apply a rearward and downward pressing force to the battery.

A working machine according to an example embodiment of the present invention includes the battery mount.

### Advantageous Effects of Invention

A battery mount and a working machine including the battery mount according to the present invention enable easy and firm securing of a battery.

### Brief Description of Drawings

[FIG. 1] FIG. 1 is a perspective view of a working machine including a battery mount according to the present invention.
[FIG. 2] FIG. 2 is a side elevation of the working machine including the battery mount according to the present invention.
[FIG. 3] FIG. 3 is a plan view illustrating the position of a battery relative to a machine body.
[FIG. 4] FIG. 4 is a perspective view of a battery mount according to a first embodiment as seen diagonally from the upper right.
[FIG. 5] FIG. 5 is a cross-sectional view of the battery mount according to the first embodiment taken at the center in a left-right direction.
[FIG. 6] FIG. 6 illustrates attachment and detachment of the battery to and from the battery mount according to the first embodiment.
[FIG. 7A] FIG. 7A illustrates a securing assembly with a fastener loosened.
[FIG. 7B] FIG. 7B illustrates the relationship between a friction surface and a pressing force applied from the securing assembly with the fastener tightened.
[FIG. 8] FIG. 8 is a side elevation illustrating the relationship between a retention member, a pressing member, and a bracket according to a second embodiment.
[FIG. 9A] FIG. 9A is a side elevation illustrating an embodiment in which the securing assembly is caused to indirectly abut a forward upper portion of the battery.
[FIG. 9B] FIG. 9B is a side elevation illustrating an embodiment in which the securing assembly is caused to directly abut the forward upper portion of the battery.

### Description of Embodiments

### [First Embodiment]

A battery mount 50 according to a first embodiment of the present invention will now be described.

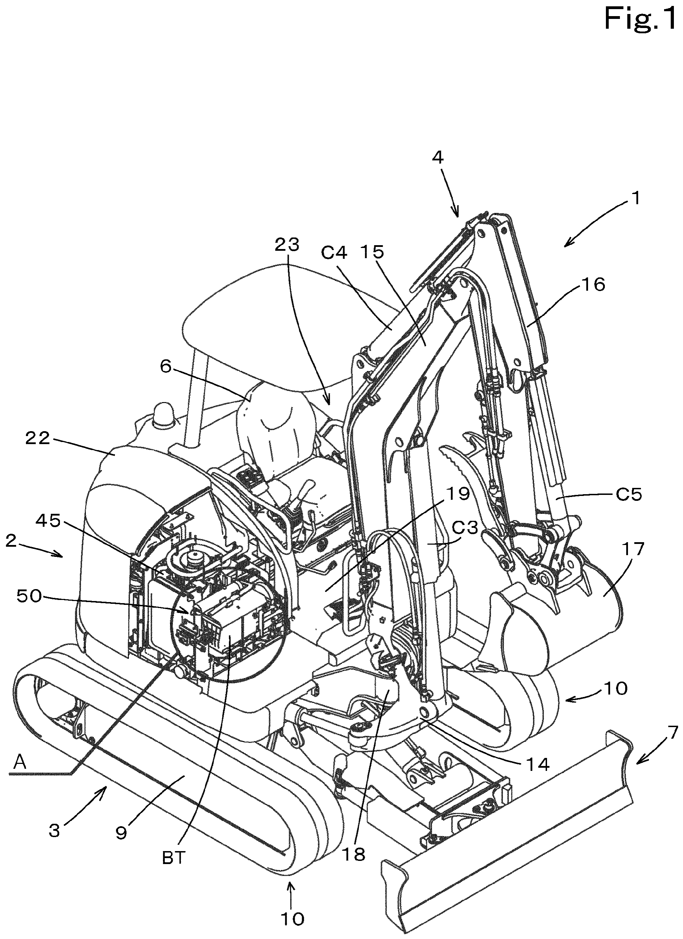

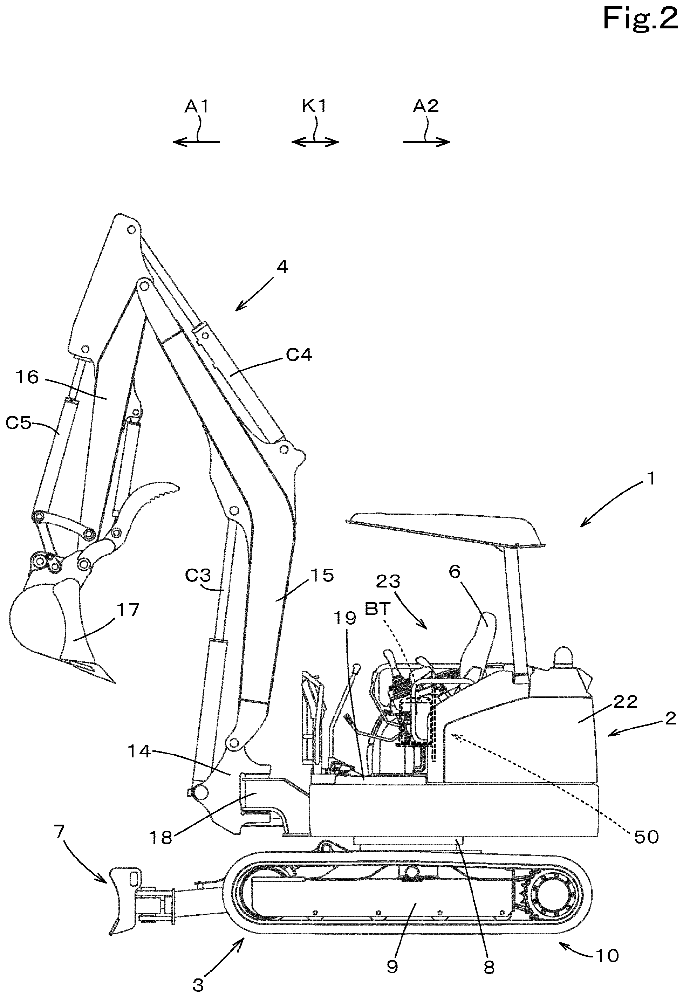

FIG. 1 is a perspective view of a working machine 1 including the battery mount 50 according to the first embodiment. FIG. 2 is a side elevation of the working machine 1.

According to the first embodiment, the battery mount 50 functions to secure a battery BT to the working machine 1 including a working device 4, such as a construction machine, an agricultural machine, or the like. The battery mount 50 according to the present invention may function to secure the battery BT to a vehicle other than the working machine 1, for example, a traveling vehicle such as a tractor, a small farm vehicle, or the like. According to the first embodiment, an example of the working machine 1 is a backhoe, which is a slewing working machine.

The working machine 1 according to the first embodiment includes a machine body (slewing base) 2, a traveling device 3, and the working device 4. The machine body 2 is provided with an operator's seat 6. An operator (driver) can be seated on the operator's seat 6. The operator's seat 6 is provided at a left forward portion of the machine body 2.

With the battery mount 50 according to the first embodiment, the battery BT is secured with its front surface (which is, among the four lateral surfaces on the periphery of the battery BT, one of the two lateral surfaces extending along the respective long edges of the upper surface of the battery BT; according to the first embodiment, the "front surface" of the battery BT refers in particular to the lateral surface near a terminal 49) facing forward of the working machine 1. However, the direction in which the battery BT is secured to the battery mount 50 according to the present invention is not limited to the direction according to the first embodiment (a direction such that the front surface of the battery BT faces forward of the working machine 1). For example, with the battery mount 50 according to the present invention, the battery BT may be secured with its front surface facing in some other direction, such as rearward, leftward, forwardly leftward, or the like of the working machine 1.

In the following description, the battery mount 50 and the working machine 1 will be described with reference to the direction in which the front surface of the battery BT faces forward of the working machine 1.

That is, directions such as forward, rearward, leftward, rightward, and the like used in describing the battery mount 50 and the working machine 1 are defined as described below.

With the working device 4 in a state (orientation) facing in the direction of forward travel of the traveling device 3, a direction pointing forward of the operator seated on the operator's seat 6 of the working machine 1 (a direction indicated by an arrow A1 in FIG. 2) is defined as forward. A direction pointing rearward of the operator (a direction indicated by an arrow A2 in FIG. 2) is defined as rearward. A direction indicated by an arrow K1 in FIG. 2 is defined as a front-rear direction. A direction pointing leftward of the operator (toward the near side of FIG. 2) seated on the operator's seat 6 is defined as leftward. A direction pointing rightward of the operator (toward the far side of FIG. 2) is defined as rightward.

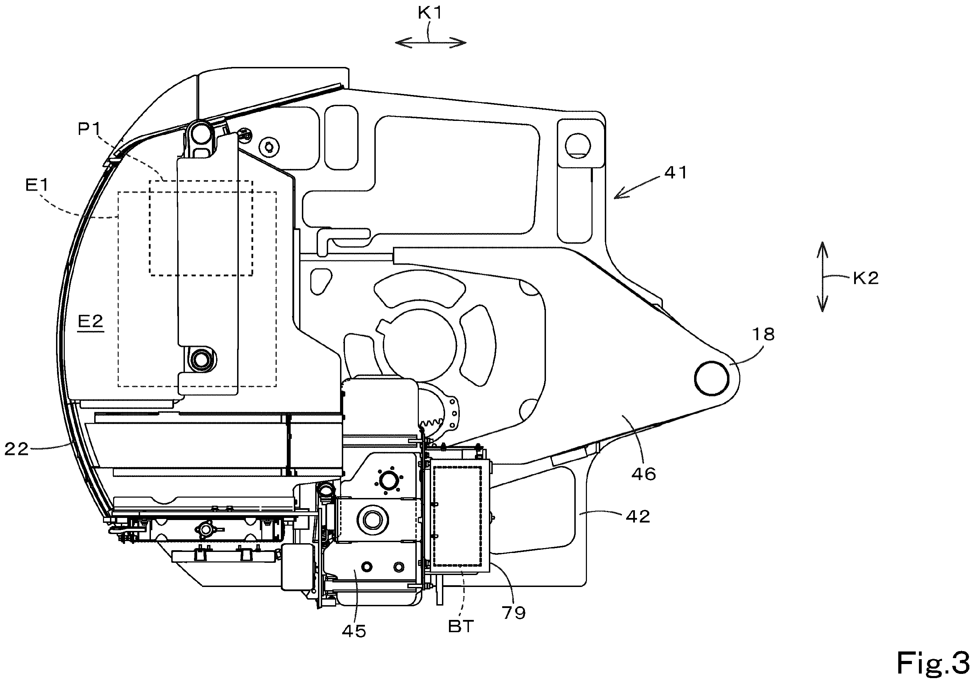

As illustrated in FIG. 3, a horizontal direction orthogonal to the front-rear direction K1 is defined as a machine-body width direction K2. A direction pointing rightward or leftward from the center in the width direction of the machine body 2 is defined as a machine-body outboard direction. In other words, the machine-body outboard direction refers to a direction parallel to the machine-body width direction and pointing away from the center in the width direction of the machine body 2. A direction opposite to the machine-body outboard direction is defined as a machine-body inboard direction. In other words, the machine-body inboard direction refers to a direction parallel to the machine-body width direction and pointing toward the center in the width direction of the machine body 2.

As illustrated in FIGS. 1 and 2, the traveling device 3 includes a traveling frame 9, and a traveling mechanism 10 provided at left and right portions of the traveling frame 9. The traveling mechanism 10 according to the first embodiment is a crawler-type traveling mechanism driven by a hydraulic motor. A dozer 7 is attached to a forward portion of the traveling device 3.

As illustrated in FIGS. 1 and 2, the working device 4 is provided at a forward portion of the machine body 2, and includes a boom 15, an arm 16, and a bucket (working tool) 17. The proximal portion of the boom 15 is pivotally attached to a swing bracket 14 to be pivotable (swingable in the up-down direction) about a lateral axis (an axis extending in the machine-body width direction K2). The swing bracket 14 is supported on a support bracket 18 provided at the forward portion of the machine body 2, to be pivotable about a vertical axis (an axis extending in the up-down direction). The arm 16 is pivotally attached at the distal end portion of the boom 15 to be pivotable (swingable in the front-rear or up-down direction) about the lateral axis. The bucket 17 is provided at the distal end of the arm 16 to perform shoveling and dumping.

Instead of the bucket 17 or in addition to the bucket 17, another working tool (hydraulic attachment) that can be driven by a hydraulic actuator can be attached to the working machine 1. Such another working tool may be a hydraulic breaker, a hydraulic crusher, an angle boom, an earth auger, a pallet fork, a sweeper, a mower, a snow blower, or the like.

The swing bracket 14 swings as a hydraulic cylinder extends and retracts. The boom 15 swings as a boom cylinder C3 extends and retracts. The arm 16 swings as an arm cylinder C4 extends and retracts. The bucket 17 performs shoveling and dumping as a bucket cylinder (working-tool cylinder) C5 extends and retracts. The boom cylinder C3, the arm cylinder C4, and the bucket cylinder C5 each include a hydraulic cylinder (hydraulic actuator).

As illustrated in FIGS. 1 and 2, the machine body 2 is supported on the traveling frame 9 (traveling device 3) via a slewing bearing 8 so that the machine body 2 can rotate (slew to the left and right) about a vertical axis.

As illustrated in FIG. 3, the machine body 2 includes a slewing frame 41 defining the framework of the machine body 2. The slewing frame 41 is constructed by securing, to a slewing base plate 42 defining the bottom portion of the machine body 2, components such as a reinforcing rib 43, the support bracket 18, and brackets or stays used for mounting various equipment (including tanks) to be installed on the machine body 2, other parts, and the like to the machine body 2.

As illustrated in FIGS. 1 and 2, an operation portion 23 including the operator's seat 6 is installed on the machine body 2.

The operation portion 23 is provided toward one side (left) relative to the center of the machine body 2. As illustrated in FIG. 2, a forward portion of the machine body 2 is provided with a floor step 19, which defines the floor of the machine body 2 (the floor at an upper portion of the machine body). The floor step 19 covers a forward left portion of the slewing frame 41. The operation portion 23 is installed rearward of the floor step 19.

As illustrated in FIGS. 2 and 3, a hood 22 is provided rearward of the operation portion 23. The interior of the hood 22 defines a prime-mover compartment E2 to accommodate a prime mover E1. The prime mover E1 is, for example, a diesel engine. The prime mover E1 drives a hydraulic pump P1, which delivers a hydraulic fluid (pressurized oil) for driving hydraulic actuators such as a hydraulic motor, a hydraulic cylinder, and the like equipped to the working machine 1. According to the first embodiment, the hydraulic pump P1 is installed inside the hood 22 and below the prime mover E1.

The prime mover E1 may be a gasoline engine or an electric motor, or may be of a hybrid type including an engine and an electric motor.

The hood 22 surrounds the prime mover E1. A support frame is provided inside the hood 22 to support the hood 22 onto the machine body 2 (slewing frame 41). The operator's seat 6 is provided forward of the hood 22.

As illustrated in FIG. 3, a fuel tank 45 is provided substantially at the center in the front-rear direction K1 of a right portion of the slewing base plate 42 (slewing frame 41). The battery BT is provided forward of the fuel tank 45.

As indicated at "A" in FIG. 1, the battery BT is a storage battery that is provided to the working machine 1, and that supplies electric power to electronics such as a controller that executes various controls related to the working machine 1, a meter, and the like. The battery BT according to the first embodiment is a lead secondary battery with a positive electrode at a left forward portion of the battery and a negative electrode at a right forward portion of the battery. The battery BT according to the present invention may be a lithium ion battery, a solid-state battery, or the like. Wiring cable(s) is/are connected to the terminal(s) 49 of the battery BT. The battery BT supplies electric power to the electronics mentioned above via the wiring cable(s).

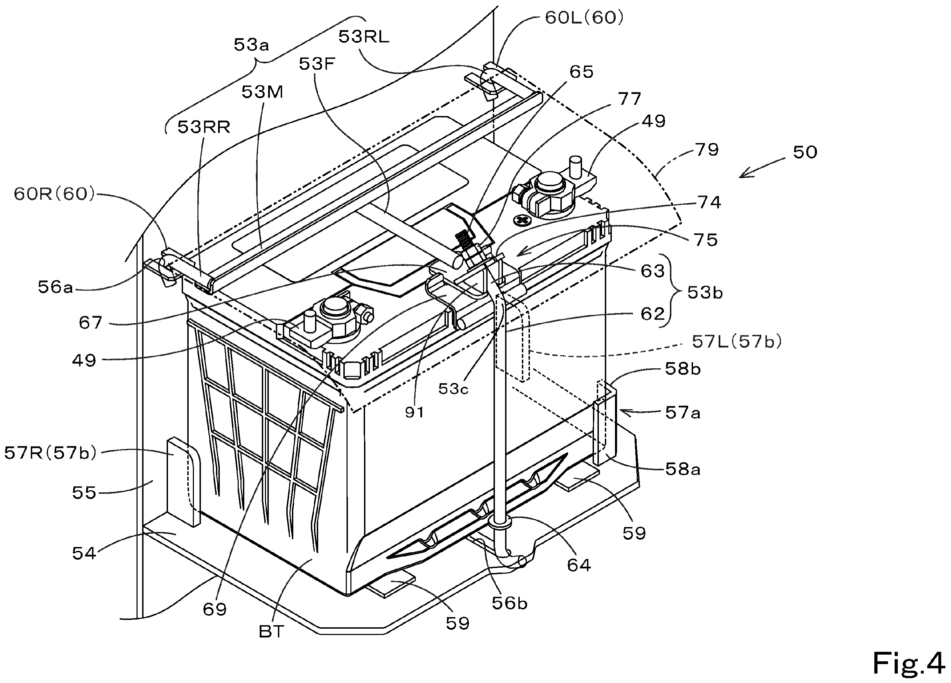

As illustrated in FIG. 4, the battery BT is mounted to the slewing frame 41 of the machine body 2 by use of the battery mount 50.

The battery mount 50 functions to secure the battery BT to the slewing frame 41 (machine body 2). Specifically, the battery mount 50 includes: a placement base 54 for placement of the battery BT; a restriction member 55 to restrict rearward movement of the battery BT, the restriction member 55 being provided at the same side of the battery BT as the rear surface of the battery BT; and a securing assembly 53 to secure the battery BT, the securing assembly 53 extending from a position above the restriction member 55 or from an upper portion of the restriction member 55 to the forward surface of the battery BT.

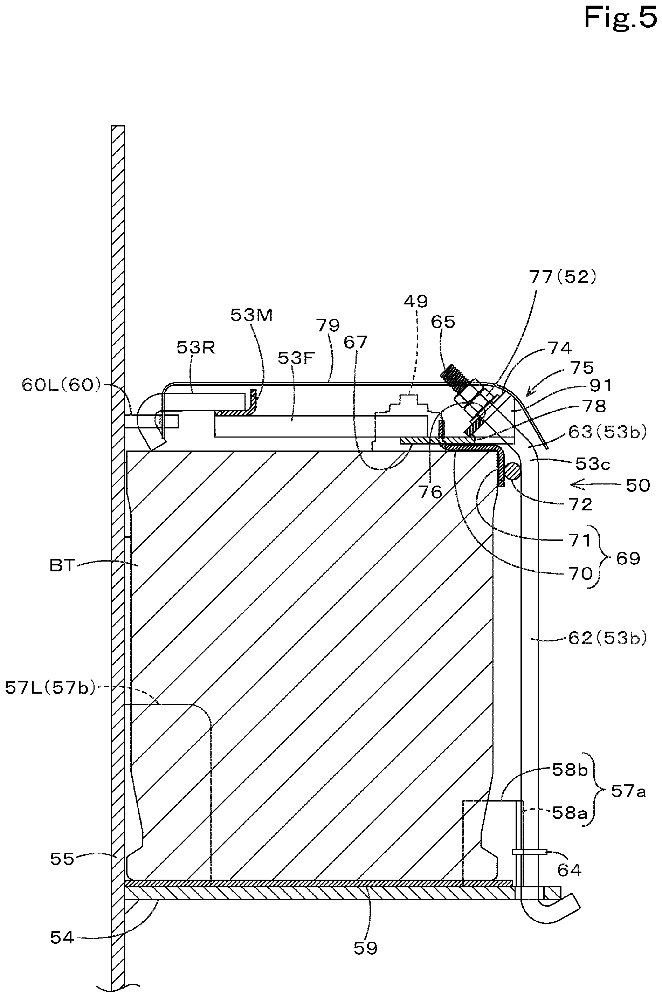

As illustrated in FIGS. 4 and 5, the placement base 54 is a plate member on which the battery BT can be placed, and the placement base 54 is wider than the battery BT in the left-right direction and the front-rear direction. According to the first embodiment, the rear end of the placement base 54 is coupled to an intermediate portion in the up-down direction of the restriction member 55. The placement base 54 is coupled integrally with the restriction member 55.

The central portion at the forward end of the placement base 54 projects forward relative to the left and right portions. A second engagement hole 56b is provided in the central portion at the forward end of the placement base 54. The lower end portion of a second securer 53b described later is engaged with the second engagement hole 56b.

A first stopper 57a and a second stopper 57b are provided on the upper surface of the placement base 54. The first stopper 57a is provided at the left end in a forward portion of the upper surface of the placement base 54, as a combination of intersecting plate members that stand in the vertical direction. Specifically, the first stopper 57a includes a lateral restriction piece 58a extending in the left-right direction, and a fore-aft restriction piece 58b extending in the front-rear direction. The lateral restriction piece 58a restricts forward movement of the battery BT relative to the placement base 54. The fore-aft restriction piece 58b restricts leftward movement of the battery BT relative to the placement base 54.

The second stopper 57b is provided as a vertically standing plate member on the upper surface of the placement base 54. The second stopper 57b includes a left restriction piece 57L provided at the left end of the placement base 54, and a right restriction piece 57R provided at the right end of the placement base 54. The left restriction piece 57L restricts leftward movement of the battery BT relative to the placement base 54. The right restriction piece 57R restricts rightward movement of the battery BT relative to the placement base 54.

An anti-slip mat 59 is provided on the upper surface of the placement base 54 to increase the frictional force between the upper surface of the placement base 54 and the bottom surface of the battery BT. The anti-slip mat 59 according to the first embodiment is provided at each of a leftward position and a rightward position on the bottom surface of the battery BT. A mat similar to the anti-slip mat 59 may be provided at the back face (rear surface) of the battery BT.

As illustrated in FIGS. 4 and 5, the restriction member 55 is provided rearward of the placement base 54, and is in the form of a plate that stands in the up-down direction. The restriction member 55 restricts rearward movement of the battery BT. The upper end of the restriction member 55 according to the first embodiment is located higher than the upper surface of the battery BT. One end portion of the securing assembly 53 (rear end portion) is coupled to a position on the restriction member 55 higher than the upper surface of the battery BT.

In another configuration(s) of the battery mount 50 according to the present invention, the upper end of the restriction member 55 may be located lower than the upper surface of the battery BT. One end portion (rear end portion) of the securing assembly 53 may simply be coupled to a position above the restriction member 55 or to an upper portion of the restriction member 55, and need not necessarily be directly coupled to the restriction member 55.

For example, the restriction member 55 that is shorter in height than the battery BT is provided at the upper surface of the placement base 54. Then, a support member different from the restriction member 55 may be provided at a position above the restriction member 55 and higher than the height of the battery BT, and the one end portion (rear end portion) of the securing assembly 53 may be coupled to the support member.

A coupling member 60 to couple the one end portion (rear end portion) of the securing assembly 53 is provided at a position on the restriction member 55 according to the first embodiment that is located higher than the upper surface of the battery BT. The coupling member 60 is in the form of a plate that projects forward of the forward surface of the restriction member 55. The coupling member 60 according to the first embodiment includes a left coupling member 60L provided at a leftward portion of the restriction member 55 (battery BT), and a right coupling member 60R provided at a rightward portion of the restriction member 55 (battery BT).

A first engagement hole 56a for engagement with the one end portion (rear end portion) of the securing assembly 53 is provided at the center of the left coupling member 60L and at the center of the right coupling member 60R. The first engagement hole 56a penetrates the center of the left coupling member 60L and the center of the right coupling member 60R in the up-down direction.

As illustrated in FIG. 4, the securing assembly 53 is located inside of the battery BT on the placement base 54 in the width direction, and more specifically, a single securing assembly 53 is provided inside of the battery BT in the width direction. According to the first embodiment, the securing assembly 53 is provided at the central portion in the width direction of the battery BT on the placement base 54.

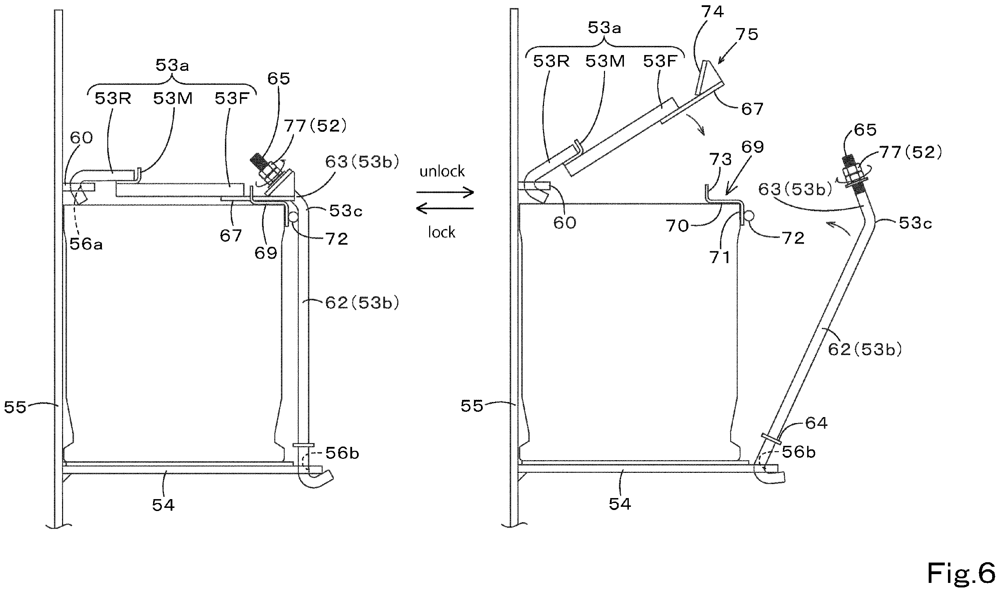

As illustrated in FIGS. 5 and 6, the securing assembly 53 includes: a first securer 53a provided at the same side of the battery BT as the upper surface of the battery BT; the second securer 53b provided at the same side of the battery BT as the forward surface of the battery BT; and a coupler 90 to couple the first securer 53a and the second securer 53b to each other. The securing assembly 53 is configured to secure the battery BT as the coupler 90 couples the other end portion (forward end portion) of the first securer 53a, and one end portion (upper end portion) of the second securer 53b to each other. In the securing assembly 53, one or both of the other end portion (forward end portion) of the first securer 53a, and the one end portion (upper end portion) of the second securer 53b are inclined relative to both the horizontal direction and the vertical direction.

The first securer 53a and the second securer 53b according to the first embodiment are each formed as a hard member that does not undergo elastic deformation, such as a metal or the like. The first securer 53a and the second securer 53b may each be an elastic member that undergoes elastic deformation, and this does not imply any limitation.

The first securer 53a according to the first embodiment is coupled at one end portion (rear end portion) to an upper portion of the restriction member 55 or to a position above the restriction member 55 (a position higher than the upper surface of the battery BT). The one end portion (rear end portion) of the first securer 53a is coupled at two spaced locations in the left-right direction to the upper portion of the restriction member 55 or to the position above the restriction member 55. The other end portion (forward end portion) of the first securer 53a is provided above a forward portion of the battery BT. The other end portion (forward end portion) of the first securer 53a is coupled at a single location at the center in the left-right direction to the one end portion (upper end portion) of the second securer 53b via the coupler 90.

The one end portion (rear end) of the first securer 53a is coupled to the upper portion of the restriction member 55 such that the other end portion (forward end portion) of the first securer 53a is swingable in the up-down direction (toward and away from the battery BT). Specifically, the first securer 53a according to the first embodiment includes: a left rear portion 53RL coupled to the left coupling member 60L; a right rear portion 53RR coupled to the right coupling member 60R; a forward portion 53F coupled to the second securer 53b; and a middle portion 53M coupling the above three portions, that is, the left rear portion 53RL, the rear end of the forward portion 53F, and the right rear portion 53RR, in the left-right direction. The left rear portion 53RL and the right rear portion 53RR are each in the form of a bar extending in the front-rear direction. The rear end of the left rear portion 53RL, and the rear end of the right rear portion 53RR each have a hooked shape (substantially J-shape in side view) that bends downward, and are engaged with the first engagement hole 56a of the left coupling member 60L, and the first engagement hole 56a of the right coupling member 60R, respectively.

The first engagement hole 56a of the left coupling member 60L, and the first engagement hole 56a of the right coupling member 60R have an opening diameter greater than the outer diameter of the left rear portion 53RL and the outer diameter of the right rear portion 53RR, respectively, of the first securer 53a. The left rear portion 53RL is thus in the first engagement hole 56a of the left coupling member 60L such that the first securer 53a is swingable in the up-down direction. The right rear portion 53RR is in the first engagement hole 56a of the right coupling member 60R such that the first securer 53a is swingable in the up-down direction.

The middle portion 53M of the first securer 53a couples the forward end of the left rear portion 53RL, and the forward end of the right rear portion 53RR to each other in the left-right direction. The middle portion 53M is in the form of a bar with a substantially L-shaped cross-section when viewed from the side. The forward end of the left rear portion 53RL, and the forward end of the right rear portion 53RR are respectively joined to the left and right ends of the middle portion 53M so as to cross the middle portion 53M from above. The rear end of the forward portion 53F of the first securer 53a is joined to the middle in the left-right direction of the middle portion 53M so as to cross the middle portion 53M from below.

The forward end of the left rear portion 53RL, and the forward end of the right rear portion 53RR are joined to the middle portion 53M from above, and the rear end of the forward portion 53F is joined to the middle portion 53M from below. That is, as viewed from the left rear portion 53RL and the right rear portion 53RR, the forward portion 53F is located lower than these rear portions by an amount corresponding to the thickness of the middle portion 53M. Using the first securer 53a having a certain thickness in the up-down direction between its forward and rear ends as described above makes it easier to press, against the upper surface of the battery BT, the forward end of the first securer 53a, and a member such as a pressing member 67 or the like provided at the forward end.

The rear end of the forward portion 53F of the first securer 53a is coupled to the center in the left-right direction of the middle portion 53M. As with the rear portion 53R, the forward portion 53F is in the form of a bar extending in the front-rear direction. The pressing member 67 (the upper end portion of the second securer 53b) is provided at the forward end of the forward portion 53F.

As illustrated in FIG. 5, a cover 79 for covering the battery BT is provided atop the first securer 53a. The cover 79 is made of electrically non-conductive resin or the like. The cover 79 is wider than the upper surface of the battery BT in the left-right direction and in the front-rear direction. That is, the cover 79 has a larger area than the upper surface of the battery BT. This allows the cover 79 to cover the entire upper surface of the battery BT. Using the cover 79 to cover the entire upper surface of the battery BT makes it possible to improve insulation for the terminal 49, and reduce the risk of electrical leakage or electric shock.

The second securer 53b is provided at the same side of the battery BT as the forward surface of the battery BT. The one end portion (upper end portion) of the second securer 53b is coupled to the other end portion (forward end portion) of the first securer 53a. The other end portion (lower end portion) of the second securer 53b extends at or near the forward surface of the battery BT, and is coupled to the placement base 54. The second securer 53b is a bar-shaped member that extends upward at a position forward of the battery BT, and that is bent at an intermediate portion (a bend portion 53c) in the up-down direction. That is, the second securer 53b according to the first embodiment is bent at a position substantially the same in the up-down direction as the upper surface of the battery BT, and the substantially same position in the up-down direction as the upper surface of the battery BT corresponds to the bend portion 53c of the second securer 53b according to the first embodiment. A portion of the second securer 53b according to the first embodiment below the bend portion 53c is a linear portion 62 extending linearly in the up-down direction. The portion of the second securer 53b below the bend portion 53c defines the other end portion (lower end portion) of the second securer 53b. A portion (a portion above the bend portion 53c) of the second securer 53b according to the first embodiment that extends from the intermediate portion (bend portion 53c) to the one end portion defines an inclined portion 63 extending in an inclination direction in which the inclined portion 63 is inclined rearward relative to the linear portion 62. A portion (inclined portion 63) of the second securer 53b above the bend portion 53c defines the one end portion (upper end portion) of the second securer 53b.

The other end portion (lower end) of the second securer 53b is coupled to the placement base 54 such that the one end portion (upper end) of the second securer 53b is swingable in the front-rear direction. Specifically, as with the rear end of the left rear portion 53RL and the rear end of the right rear portion 53RR described above, the lower end of the linear portion 62 has a hooked shape that is bent forward. The lower end of the linear portion 62 is engaged with the second engagement hole 56b provided in the placement base 54. The second engagement hole 56b of the placement base 54 has an opening diameter greater than the outer diameter of the linear portion 62. Therefore, the lower end of the linear portion 62 is coupled to the placement base 54 such that the one end portion (upper end portion) is swingable in the front-rear direction of the battery BT (toward and away from the battery BT).

An anti-detachment member 64 with respect to the second engagement hole 56b is provided at a lower portion of the linear portion 62. The anti-detachment member 64 is larger in size than the opening diameter of the second engagement hole 56b. The presence of the anti-detachment member 64 eliminates or reduces the risk that the linear portion 62 (second securer 53b) located higher than the anti-detachment member 64 may pass through the second engagement hole 56b and drop below the placement base 54.

The inclined portion 63 is inclined in an inclination direction in which the inclined portion 63 is positioned closer to the rear surface of the battery BT as the inclined portion 63 extends upward. With the linear portion 62 oriented in the up-down direction, the inclined portion 63 is inclined rearward at an inclination angle of approximately 45 degrees with respect to the upward direction serving as a reference (0 degrees). According to the first embodiment, the inclination angle of the inclined portion 63 is approximately 45 degrees. However, the inclination angle of the inclined portion 63 is not limited to approximately 45 degrees but may be approximately 30 degrees or approximately 60 degrees. According to the first embodiment described above, the inclined portion 63 is inclined forward due to the bending of the bend portion 53c. However, it may suffice that the inclined portion 63 be inclined. The intermediate portion (the bend portion 53c according to the first embodiment) may be a portion where a bar-shaped member defining the second securer 53b is curved rearward.

For example, if the battery BT used is heavy, a large weight is exerted downward on the placement base 54, and thus the frictional force generated between the bottom surface of the battery BT and the placement base 54 also increases in magnitude. In such a case, the inclination angle of the inclined portion 63 can be made smaller than approximately 45 degrees so that an increased force is exerted on the restriction member 55 in the horizontal direction (the force acting in the vertical direction is mitigated). If the battery BT used is light, the inclination angle of the inclined portion 63 can be made larger than approximately 45 degrees, so that a decreased force is exerted in the horizontal direction on the restriction member 55 of a bracket 51 and an increased force is exerted downward on the placement base 54. That is, with the battery mount 50 according to the present invention, the inclination angle of the inclined portion 63 can be changed to any angle.

The upper end of the inclined portion 63 includes a thread groove 65. The thread groove 65 is in a spiral with respect to the axis of the inclined portion 63 (the axis of a bar-shaped member defining the inclined portion 63). A retention member 52 of the coupler 90 described later can be screwed into the thread groove 65.

In the battery mount 50 according to the present invention, the coupler 90 functions to change, along the inclination direction of the securing assembly 53, the position at which the first securer 53a and the second securer 53b are coupled to each other. This allows the securing assembly 53 to change at least one of the following lengths: the length of the first securer 53a from the first engagement hole 56a to the coupler 90; and the length of the second securer 53b from the second engagement hole 56b to the coupler 90. That is, the securing assembly 53 is configured to be capable of changing the effective length of the securing assembly 53 (the length of its portion that contributes to the pressing/securing of the battery BT), which is the length extending from the first engagement hole 56a to the second engagement hole 56b along the upper and forward surfaces of the battery BT.

Specifically, the coupler 90 includes the inclined portion 63, and the retention member 52 which retains the position at which the other of the first securer 53a and the second securer 53b is coupled to the inclined portion 63 relative to the inclined portion 63. According to the first embodiment, the one end portion (upper end portion) of the second securer 53b is provided with the inclined portion 63, and the coupler 90 functions to adjust, by use of the retention member 52, the position at which the inclined portion 63 of the second securer 53b, and the other end portion (forward end portion) of the first securer 53a are coupled to each other.

As described above, according to the first embodiment, the one end portion (upper end portion) of the second securer 53b is provided with the inclined portion 63. However, it is only necessary that the inclined portion 63 be provided in one of the first securer 53a and the second securer 53b, and inclined in an inclination direction such that the distance between the inclined portion 63 and the rear surface of the battery BT decreases in the upward direction. The inclined portion 63 may be provided in the first securer 53a. In such a case, the coupler 90 functions to adjust, by use of the retention member 52, the position at which the inclined portion 63 of the first securer 53a, and the one end portion (upper end portion) of the second securer 53b are coupled to each other.

The retention member 52 will now be described in detail. The retention member 52 moves along the inclined portion 63 to change the position at which the other of the first securer 53a and the second securer 53b is coupled to the inclined portion 63 relative to the inclined portion 63. The retention member 52 according to the first embodiment is provided on the inclined portion 63 at the one end portion (upper end portion) of the second securer 53b to retain the position of the other end portion (forward end portion) of the first securer 53a relative to the inclined portion 63. According to the first embodiment, a fastener such as a nut or the like is used as the retention member 52. That is, in the battery mount 50 according to the first embodiment, the retention member 52 is a fastener 77 such as a nut or the like to be screwed into the thread groove 65 provided on the inclined portion 63. With the fastener 77 described above used as the retention member 52, as the fastener 77 moves in the inclination direction along the inclined portion 63 at the one end portion (upper end portion) of the second securer 53b, the position (relative position) of the other end portion (forward end portion) of the first securer 53a is changed in the inclination direction relative to the one end portion (upper end portion) of the second securer 53b. This makes it possible to change the coupling position between the first securer 53a and the second securer 53b.

The other one of the first securer 53a and the second securer 53b is provided with an inclined surface 74, which is inclined in a direction crossing the inclination direction of the inclined portion 63. According to the first embodiment, the inclined surface 74 is provided at the other end portion (forward end portion) of the first securer 53a, and the inclined surface 74 is inclined in a direction crossing the inclined surface of the inclined portion 63 of the second securer 53b. That is, the inclined surface 74 is provided at the other end portion (forward end portion) of the first securer 53a. The inclined surface 74 is provided so as to face toward the one end portion (rearward and upward) of the first securer 53a. The retention member 52 (fastener 77) abuts the inclined surface 74 to retain the position of the one end portion (upper end portion) of the second securer 53b relative to the inclined surface 74.

If the second securer 53b is provided with the inclined surface 74, the retention member 52 (fastener 77) abuts the inclined surface 74 to retain the position of the other end portion (forward end portion) of the first securer 53a relative to the inclined surface 74.

The retention member 52 (fastener 77) of the coupler 90 according to the first embodiment, and the inclined surface 74 of the first securer 53a will now be described.

As illustrated in FIG. 6, the fastener 77 (retention member 52) according to the first embodiment is of a double-nut type, and includes two nuts to be screwed into the thread groove 65. Using the fastener 77 of a double-nut type makes it possible to prevent or reduce loosening of the fastener 77 from the thread groove 65.

Although a double-nut fastener is used as the fastener 77 according to the first embodiment, the fastener 77 according to the present invention is not limited to a double-nut fastener. For example, a nut with a locking function can be used, such as a locking nut whose contact with the thread groove 65 creates a frictional force, a nut pre-coated with cured resin at the location of contact with the thread groove 65, a flanged nut, a disc spring nut, or the like.

The inclined surface 74 is inclined forwardly upward at an inclination angle of approximately 45 degrees with respect to the upward direction serving as a reference (0 degrees). Specifically, in the battery mount 50 according to the first embodiment, the other end portion (forward end portion) of the first securer 53a is provided with a slope member 75 including the inclined surface 74. The pressing member 67 to press the battery BT downward is provided between the slope member 75, and the other end portion (forward end portion) of the first securer 53a. If the inclined surface 74 of the slope member 75 is inclined forward at 45 degrees, the inclined surface 74 crosses the inclined portion 63 of the second securer 53b, which is inclined rearward at 45 degrees, at approximately 90 degrees. As a result, the fastening force due to the fastener 77 described later can be exerted in a direction normal to the inclined surface 74. This allows the fastening force due to the fastener 77 to be reliably exerted on the upper surface of the battery BT via the inclined surface 74 (slope member 75), the pressing member 67, and a clamp member 69.

The pressing member 67 is provided between the other end portion (forward end portion) of the first securer 53a, and the slope member 75. The pressing member 67 is a plate-shaped member provided with its plate faces opposite to each other in the up-down direction. The pressing member 67 is capable of making surface contact with the upper surface of the battery BT. The slope member 75 is provided on the upper surface of a forward portion of the pressing member 67.

The slope member 75 is an angular member provided on the upper surface of the pressing member 67. An upper portion of the slope member 75 is provided with the inclined surface 74, which is inclined forward at 45 degrees. A lower portion of the slope member 75 is provided with a rib member 91.

The inclined surface 74 of the slope member 75 has an insertion hole 76 through which the inclined portion 63 of the second securer 53b is to be inserted. The insertion hole 76 is provided in the inclined surface 74 as an elongated hole elongated in the front-rear direction. The insertion hole 76 is provided between the forward end of the inclined surface 74 and an intermediate portion in the front-rear direction of the inclined surface 74. The insertion hole 76 is oriented forward. The inclined portion 63 of the second securer 53b can be inserted into the insertion hole 76 from forward of the insertion hole 76 while being allowed to swing. The insertion hole 76 has an opening width in the left-right direction greater than the outer diameter of the second securer 53b (inclined portion 63). Making the opening width of the insertion hole 76 greater than the outer diameter of the second securer 53b allows the second securer 53b to be insertable through the insertion hole 76.

A guide hole 78 is provided in a portion of the pressing member 67 below the slope member 75 to allow deep insertion of the inclined portion 63 of the second securer 53b into the insertion hole 76. As with the insertion hole 76, the guide hole 78 is provided at a forward portion of the pressing member 67 as an elongated hole elongated in the front-rear direction, and is oriented forward.

As illustrated in FIGS. 4 and 5, the slope member 75 includes the rib member 91 on the upper surface of the pressing member 67. The rib member 91 on the upper surface of the pressing member 67 is provided on each of the left and right of the guide hole 78. The rib member 91 on each of the left and right is in the form of a triangular plate when viewed from the left or the right. The rib member 91 on each of the left and right extends in the front-rear direction and up-down direction. The presence of the rib member 91 on the left and right allows the inclined surface 74 to be supported stably at a predetermined inclination angle (45 degrees toward the rear according to the first embodiment) relative to the upper surface of the pressing member 67.

Due to the presence of the rib member 91 on both the left and right of the guide hole 78, the guide hole 78 is located between the rib member 91 on the left and the rib member 91 on the right. This allows the second securer 53b (inclined portion 63) to be smoothly guided to the guide hole 78.

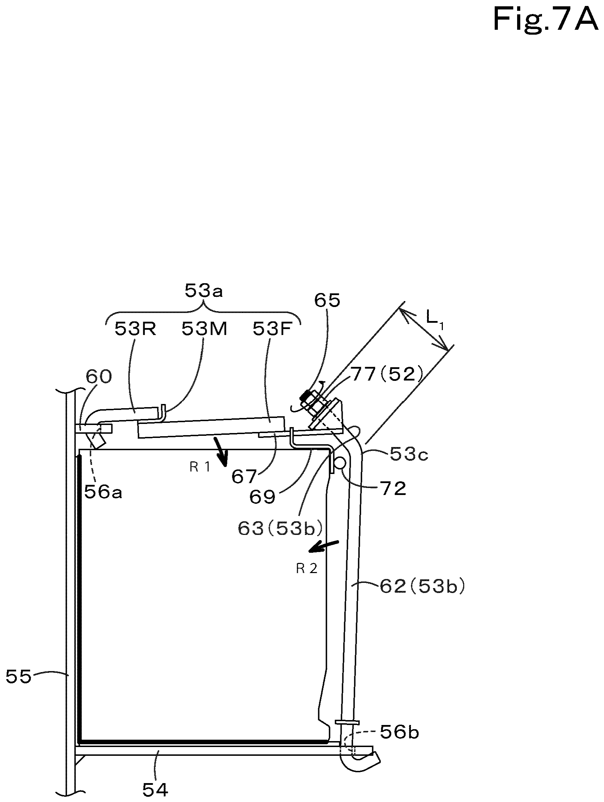

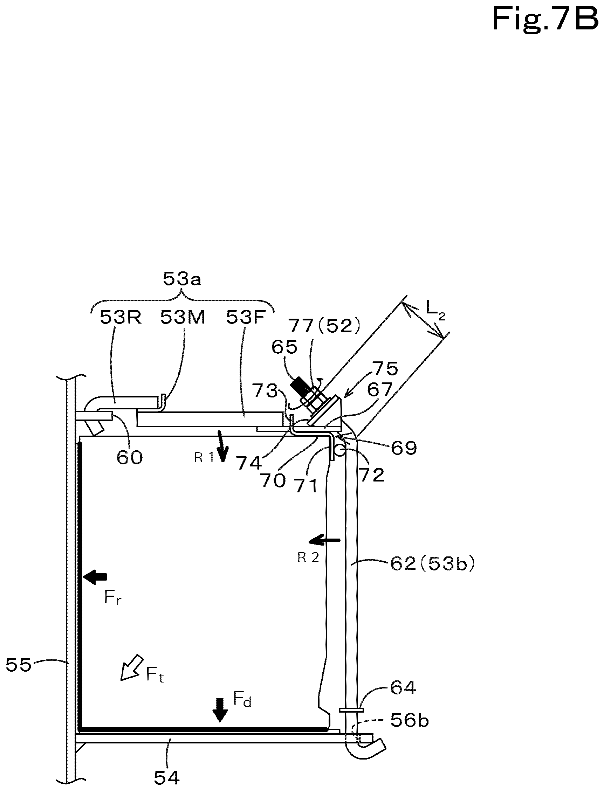

Reference is now made to FIGS. 7A and 7B to describe a pressing force (force Ft) that is generated on the battery BT due to the fastener 77 screwed into the thread groove 65.

FIG. 7A illustrates the battery mount 50 before the fastener 77 is screwed into the thread groove 65, in other words, in a state with the fastener 77 loosened. FIG. 7B illustrates the battery mount 50 after the fastener 77 is screwed into the thread groove 65, in other words, in a state with the fastener 77 fastened and the pressing force (force Ft) generated.

As illustrated in FIG. 7A, before the fastener 77 is screwed into the thread groove 65, the fastener 77 is located at the distal end of the inclined portion 63 (the coupling position of the coupler 90 is at the distal end of the inclined portion 63). Accordingly, a length L₁ from the bend portion 53c to the fastener 77 in the inclination direction of the second securer 53b is greater than a length L₂ illustrated in FIG. 7B when the fastener 77 is in a fastened state.

As the fastener 77 is tightened, the fastener 77 moves toward the proximal end (toward the bend portion 53c) of the inclined portion 63, and the length of the second securer 53b from the bend portion 53c to the fastener 77 decreases from L₁ to L₂. As a result, the coupling position of the coupler 90 moves from the distal end of the inclined portion 63 toward the proximal end. This causes the first securer 53a to pivot downward (in a direction indicated at R1 in FIGS. 7A and 7B), and causes the second securer 53b to pivot rearward (in a direction indicated at R2 in FIGS. 7A and 7B).

As illustrated in FIG. 7B, as the fastener 77 is deeply screwed into the thread groove 65, the coupling position of the coupler 90 moves further toward the proximal end (toward the bend portion 53c) of the inclined portion 63, and the pressing member 67 presses downward the upper surface of the battery BT. This causes a downward pressing force Fd to be generated on the upper surface of the battery BT. Meanwhile, the second securer 53b comes into contact with the forward surface of the battery BT as the second securer 53b pivots rearward. This causes a rearward pressing force Fr to be generated on the forward surface of the battery BT.

As a result, a pressing force Ft (Ft indicated by an open arrow in FIG. 7B) that is directed rearward and downward is generated on the battery BT as the resultant of the downward pressing force Fd and the rearward pressing force Fr. Due to the pressing force Fd exerted on the bottom surface of the battery BT and the upper surface of the placement base 54, when the battery BT is about to move in the horizontal direction, a frictional force is generated on the bottom surface of the battery BT to restrict movement of the battery BT in the horizontal direction. In addition to the frictional force on the bottom surface of the battery BT, a frictional force is also generated on the rear surface of the battery BT when the pressing force Fr is exerted on the rear surface of the battery BT and the forward surface of the restriction member 55. As a result, a frictional force is generated on two faces, the bottom surface and the rear surface, of the battery BT. This makes it possible to more reliably prevent or reduce movement of the battery BT in the horizontal direction.

According to the first embodiment, the clamp member 69 extends between the upper surface of the battery BT and the forward end portion of the first securer 53a, and between the forward surface of the battery BT and the second securer 53b. That is, the securing assembly 53 presses the battery BT in two directions, downward and rearward, via the clamp member 69.

The clamp member 69 is a member provided at the forward upper edge of the battery BT so as to extend across the upper and forward surfaces of the battery BT. The clamp member 69 is bent in an L-shape when viewed in cross-section in the left-right direction. A portion of the clamp member 69 located rearward of where the clamp member 69 is bent in the L-shape defines a first surface contact portion 70 that is in surface contact with a forward portion of the upper surface of the battery BT. A portion of the clamp member 69 located lower than where the clamp member 69 is bent in the L-shape defines a second surface contact portion 71 that is in surface contact with an upper portion of the forward surface of the battery BT.

The rear end of the first surface contact portion 70 is bent to protrude upward to define a protrusion 73. The protrusion 73 includes a left protrusion 73L provided at the rear left end of the first surface contact portion 70, and a right protrusion 73R provided at the rear right end of the first surface contact portion 70. The area between the left protrusion 73L and the right protrusion 73R is flush with the forward end of the first surface contact portion 70. The pressing member 67 of the retention member 52 is overlapped with the first surface contact portion 70 (the upper surface of the first surface contact portion 70) between the left protrusion 73L and the right protrusion 73R such that the pressing member 67 is movable in the front-rear direction.

A force transmission member 72 is provided between the securing assembly 53 and the battery BT. The force transmission member 72 transmits the pressing force exerted by the securing assembly 53 to the battery BT. More specifically, the force transmission member 72 is provided on the second surface contact portion 71 of the clamp member 69, and makes contact with an upper portion of the linear portion 62 of the second securer 53b to transmit the pressing force to the second surface contact portion 71. The force transmission member 72 is a bar-shaped member provided with its axis oriented in the left-right direction. The force transmission member 72 is capable of transmitting the pressing force evenly across the entire width from the left end to the right end of the second surface contact portion 71. The retention member 52 is overlapped in the front-rear direction with the surface (forward surface) of the second surface contact portion 71.

Although the first embodiment uses the force transmission member 72 in the form of a cylindrical bar, the configuration of the force transmission member 72 is not limited to this. For example, the force transmission member 72 may have an elliptical shape or a polygonal shape in cross-section and, additionally or alternatively, may be a solid structure or may be a hollow structure. The force transmission member 72 may be formed by curving or bending the plate-shaped member defining each of the first surface contact portion 70 and the second surface contact portion 71.

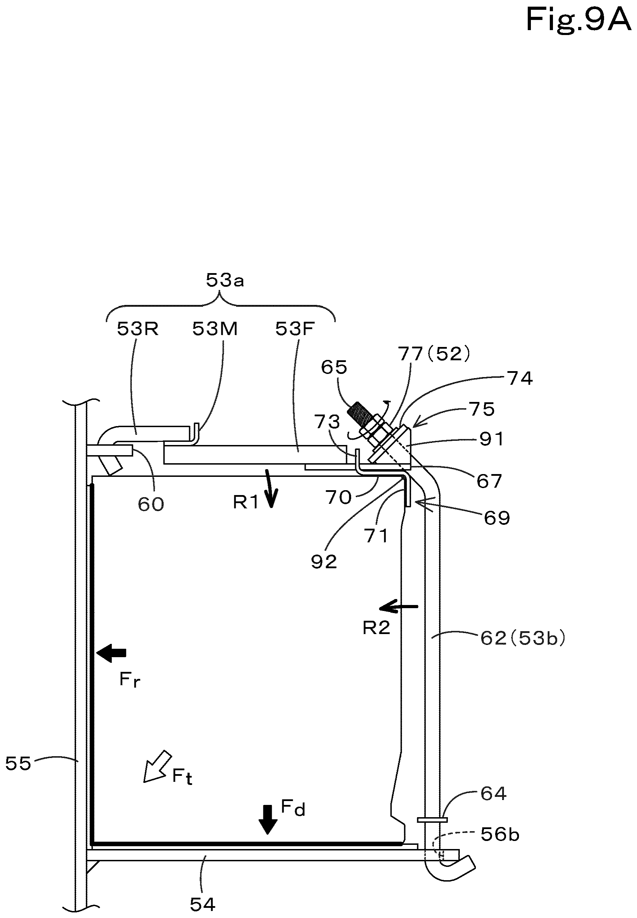

As illustrated in FIG. 9A, the force transmission member 72 may be omitted, and the second securer 53b may be made to directly abut the second surface contact portion 71 of the clamp member 69. In other words, it can be also said that in the example illustrated in FIG. 9A, the securing assembly 53 (second securer 53b) indirectly abuts an upper forward corner portion 92 of the battery BT via the clamp member 69 to apply the rearward pressing force Fr and the downward pressing force Fd to the battery BT.

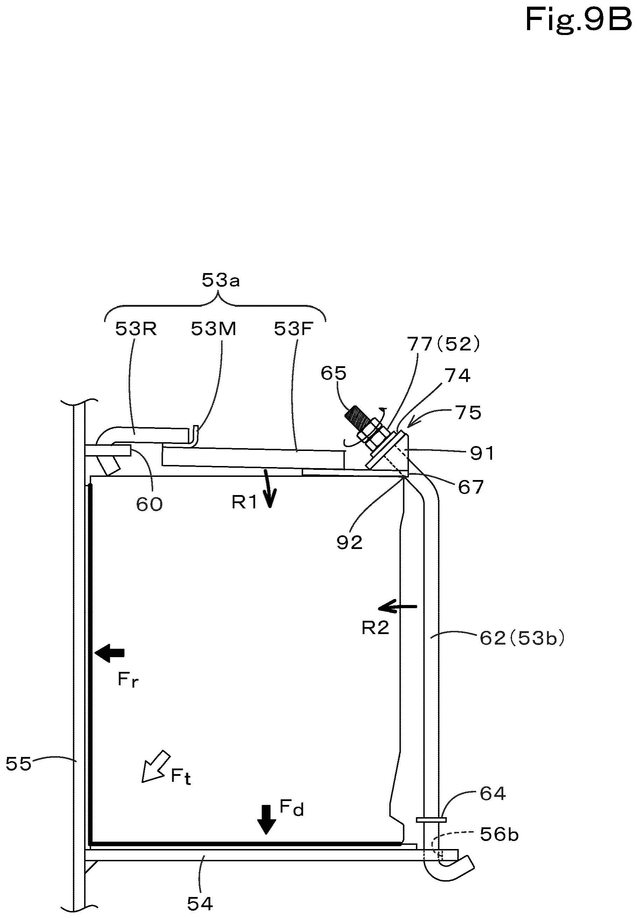

As illustrated in FIG. 9B, the force transmission member 72 and the clamp member 69 may be omitted, and the second securer 53b may be made to directly abut the upper forward corner portion 92 of the battery BT. This also makes it possible to apply the rearward pressing force Fr and the downward pressing force Fd to the battery BT.

The force transmission member 72 may be mounted to the second securer 53b or the first securer 53a rather than to the clamp member 69. The force transmission member 72 may be held between the clamp member 69 and the second securer 53b without being secured to any one of the clamp member 69, the second securer 53b, and the first securer 53a.

A locking and unlocking procedure for the battery mount 50 according to the first embodiment, in other words, a method for mounting and removing the battery BT to and from the battery mount 50 according to the present invention will now be described.

As illustrated in the left of FIG. 7, in removing the battery BT secured on the battery mount 50 according to the first embodiment, the fastener 77 is turned in the loosening direction relative to the thread groove 65 to loosen the fastener 77 relative to the thread groove 65. The loosening of the fastener 77 causes the coupling position of the coupler 90 to move in the inclination direction from the proximal end of the inclined portion 63 toward the distal end, and the inclined portion 63 of the second securer 53b, which has been secured in the insertion hole 76, becomes able to disengage from the insertion hole 76. Moreover, the first securer 53a becomes swingable in a direction (upward) away from the upper surface of the battery BT. This results in the disappearance of the downward pressing force Fd that has been exerted on the upper surface of the battery BT. Further, the second securer 53b becomes swingable in a direction (forward) away from the forward surface of the battery BT. This results in the disappearance of the rearward pressing force Fr that has been exerted on the forward surface of the battery BT. As a result, as illustrated in the right of FIG. 7, the battery BT that has been secured on the battery mount 50 becomes removable.

In securing the battery BT to the battery mount 50, the operation performed for removing the battery BT is performed in the reverse order. This allows the battery BT to be secured to the bracket 51.

A battery mount 50 as has been described includes a placement base 54 for placement of a battery BT, a restriction member 55 to restrict rearward movement of the battery BT, the restriction member 55 being provided at the same side of the battery BT as a rear surface of the battery BT, and a securing assembly 53 to secure the battery BT, the securing assembly 53 extending from a position above the restriction member 55 or from an upper portion of the restriction member 55 to a forward surface of the battery BT, wherein the securing assembly 53 includes a first securer 53a provided at the same side of the battery BT as an upper surface of the battery BT, a second securer 53b provided at the same side of the battery BT as the forward surface of the battery BT, and a coupler 90 to couple the first securer 53a and the second securer 53b to each other, and the coupler 90 includes an inclined portion 63 provided in one of the first securer 53a and the second securer 53b, the inclined portion 63 being inclined in an inclination direction such that a distance between the inclined portion 63 and the rear surface of the battery BT decreases in an upward direction, and a retention member 52 to retain a position at which the other of the first securer 53a and the second securer 53b is coupled to the inclined portion 63 such that the position relative to the inclined portion 63 is adjustable.

Since the position at which the first securer 53a and the second securer 53b are coupled to each other, along the inclination direction of the securing assembly 53, is changed as described above, the effective length of the securing assembly 53 (the length of its portion that contributes to the pressing/securing of the battery BT) can be changed.

The first securer 53a includes one end portion coupled to the position above the restriction member 55 or to the upper portion of the restriction member 55, and another end portion provided above a forward portion of the battery BT. The second securer 53b includes one end portion at which the inclined portion 63 of the coupler 90 is provided, and another end portion coupled to the placement base 54.

Since the position at which the securers 53a and 53b are coupled to each other is adjusted along the inclination direction as described above, the effective length of the securing assembly 53 can be changed.

The second securer 53b is bent at an intermediate portion 53c (bent portion 53c), and a portion of the second securer 53b that extends from the intermediate portion 53c to the one end portion defines the inclined portion 63 extending in the inclination direction.

Using the second securer 53b as described above makes it possible to change the position at which the other end portion (forward end portion) of the first securer 53a is coupled to the inclined portion 63, extending from the intermediate portion 53c to the one end portion of the second securer 53b, relative to the inclined portion 63. This makes it possible to easily change the effective length of the securing assembly 53.

The restriction member 55 extends from the placement base 54 to a position higher than the battery BT. The one end portion (rear end portion) of the first securer 53a is coupled to the upper portion of the restriction member 55 such that the first securer 53a is swingable in an up-down direction. The other end portion of the second securer 53b is coupled to the placement base 54 such that the second securer 53b is swingable in a front-rear direction of the battery BT.

Since the first securer 53a swingable in the up-down direction is provided at the upper portion of the restriction member 55 and the second securer 53b swingable in the front-rear direction of the battery BT is provided as described above, it is possible to easily change the effective length of the securing assembly 53 to thus apply a pressing force on the upper and forward surfaces of the battery BT. It follows that a frictional force can be generated on two faces, i.e., the bottom surface and the rear surface, of the battery BT.

The retention member 52 is configured to move along the inclined portion 63 to change the position at which the other of the first securer 53a and the second securer 53b is coupled to the inclined portion 63 relative to the inclined portion 63.

The presence of the retention member 52 as described above makes it possible to change the position at which the other of the first securer 53a and the second securer 53b is coupled to the inclined portion 63 relative to the inclined portion 63. This makes it possible to easily change the effective length of the securing assembly 53.

The other of the first securer 53a and the second securer 53b includes an inclined surface 74 inclined in a direction crossing the inclination direction. The retention member 52 is configured to abut the inclined surface 74 to retain the position at which the other of the first securer 53a and the second securer 53b is coupled to the inclined portion 63 relative to the inclined portion 63.

The presence of the retention member 52 that abuts the inclined surface 74 as described above makes it possible to retain the position at which the other of the first securer 53a and the second securer 53b is coupled to the inclined portion 63 relative to the inclined portion 63.

The inclined portion 63 includes a thread groove 65. The retention member 52 includes a fastener 77 to be screwed into the thread groove 65.

The inclined portion 63 includes the thread groove 65, and the fastener 77 to be screwed into the thread groove 65 is provided as the retention member 52. This makes it possible to not only retain the position at which the other of the first securer 53a and the second securer 53b is coupled to the inclined portion 63 relative to the inclined portion 63, but also easily change the effective length of the securing assembly 53.

The securing assembly 53 is located inside of the battery BT on the placement base 54 in a width direction of the battery BT.

The securing assembly 53 is provided inside of the battery BT in the width direction. This configuration makes the battery mount 50 compact in the width direction, and enables its installation without the need for a large space.

The securing assembly 53 is a single securing assembly 53 located inside of the battery BT on the placement base 54 in the width direction of the battery BT.

Only a single securing assembly 53 is provided inside of the battery BT in the width direction. Thus, the operation required for fastening or the like need only be performed only once. This enables quick securing of the battery BT.

The battery mount 50 further includes a clamp member 69 extending between the upper surface of the battery BT and the first securer 53a and between the forward surface of the battery BT and the second securer 53b. The clamp member 69 is configured such that the first securer 53a causes the clamp member 69 to press the upper surface of the battery BT downward, and the second securer 53b causes the clamp member 69 to press the forward surface of the battery BT rearward.

The presence of the clamp member 69 allows a pressing force to be evenly transmitted, from the securing assembly 53 that swings, to the upper surface of the battery BT to thus appropriately press the battery BT.

The battery mount 50 further includes a force transmission member 72 provided between the securing assembly 53 and the battery BT to transmit a pressing force exerted by the securing assembly 53 to the battery BT.

With the force transmission member 72 as described above, a force transmitted to the force transmission member 72 can be appropriately applied to the battery BT as a pressing force.

The securing assembly 53 is configured to directly or indirectly abut an upper forward corner portion 92 of the battery BT to apply a rearward and downward pressing force to the battery BT.

A force is directly or indirectly transmitted from the securing assembly 53 to the upper forward corner portion 92 of the battery BT as described above. This allows a pressing force to be appropriately applied to the battery BT by means of a simple hardware configuration with no force transmission member 72 or clamp member 69 used.

A working machine 1 includes the battery mount 50 described above. This makes it possible to provide a working machine 1 that achieves the specific effect(s) mentioned above.

### [Second Embodiment]

The battery mount 50 according to a second embodiment will now be described.

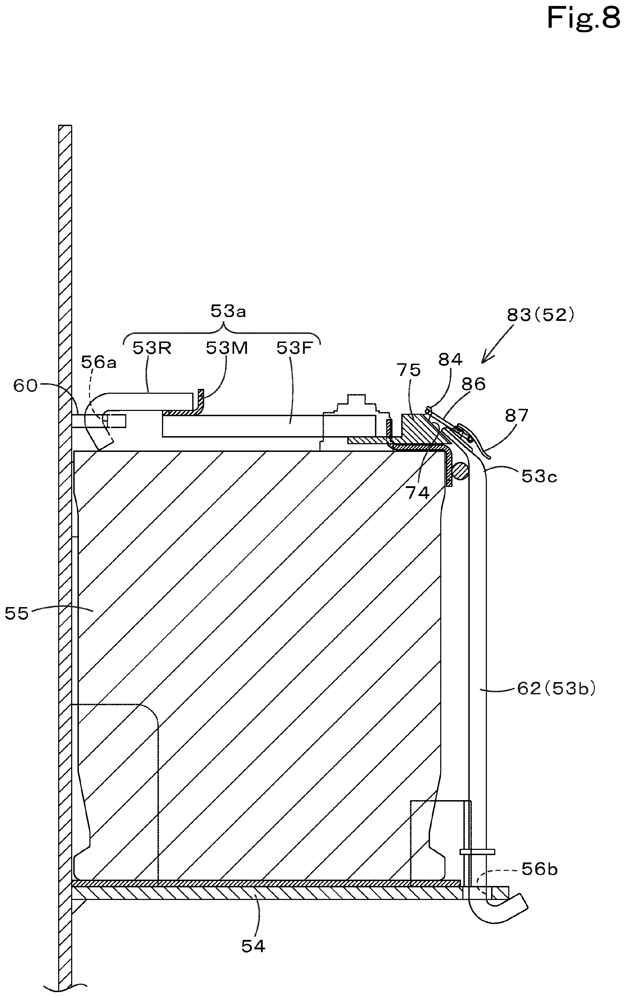

FIG. 8 is a cross-section of the battery mount 50 according to the second embodiment as viewed from the right side. As illustrated in FIG. 8, the battery mount 50 according to the second embodiment uses, as the retention member 52, a clamping fixture 83 such as a toggle clamp or the like, rather than the fastener 77 such as a nut or the like.

Specifically, as with the first embodiment, the slope member 75 is provided for the retention member 52 according to the second embodiment, and the inclined surface 74 of the slope member 75 is provided with a hook member 84. The hook member 84 is a fixture whose forward upper portion is formed into a recessed shape. The hook member 84 allows a latch 86 of the clamping fixture 83 to be latched thereon.

As with the first embodiment, the second securer 53b according to the second embodiment also includes the inclined portion 63. The inclined portion 63 according to the second embodiment is in the form of a flat plate, with the clamping fixture 83 mounted to the upper surface of the inclined portion 63.

The clamping fixture 83 is a toggle clamp, and includes a lever member 87 to pull the latch 86 forward. With the clamping fixture 83, tilting the lever member 87 forward against the elastic force of an elastic member (not illustrated) allows the latch 86 to be locked in a forwardly pulled state (fastened state).

That is, with the battery mount 50 according to the second embodiment, as the lever member 87 is tilted forward to bring the latch 86 into a forwardly pulled state, the distance between the other end portion (forward end portion) of the first securer 53a, and the one end portion (upper end portion) of the second securer 53b decreases. This allows the length of the securing assembly 53 to decrease as with the first embodiment. As a result, the first securer 53a comes into proximity with the upper surface of the battery BT, and the second securer 53b comes into proximity with the forward surface of the battery BT. That is, the first securer 53a comes into abutment with the upper surface of the battery BT, and the downward pressing force Fd is generated on the upper surface of the battery BT. Further, the rearward pressing force Fr is generated on the forward surface of the battery BT. Therefore, as with the first embodiment, a frictional force can be generated on two faces, the bottom surface and the rear surface, of the battery BT.

Preferred embodiments of the present invention provide the battery mount 50 and the working machine 1 described in items below.

(Item 1) A battery mount 50 including a placement base 54 for placement of a battery BT, a restriction member 55 to restrict rearward movement of the battery BT, the restriction member 55 being provided at the same side of the battery BT as a rear surface of the battery BT, and a securing assembly 53 to secure the battery BT, the securing assembly 53 extending from a position above the restriction member 55 or from an upper portion of the restriction member 55 to a forward surface of the battery BT, wherein the securing assembly 53 includes a first securer 53a provided at the same side of the battery BT as an upper surface of the battery BT, a second securer 53b provided at the same side of the battery BT as the forward surface of the battery BT, and a coupler 90 to couple the first securer 53a and the second securer 53b to each other, and the coupler 90 includes an inclined portion 63 provided in one of the first securer 53a and the second securer 53b, the inclined portion 63 being inclined in an inclination direction such that a distance between the inclined portion 63 and the rear surface of the battery BT decreases in an upward direction, and a retention member 52 to retain a position at which the other of the first securer 53a and the second securer 53b is coupled to the inclined portion 63 such that the position relative to the inclined portion 63 is adjustable.

With the battery mount 50 according to item 1 above, the effective length of the securing assembly 53 (the length of its portion that contributes to the pressing/securing of the battery BT) can be changed by changing the position at which the first securer 53a and the second securer 53b are coupled to each other along the inclination direction of the securing assembly 53.

(Item 2) The battery mount 50 according to item 1, wherein the first securer 53a includes one end portion coupled to the position above the restriction member 55 or to the upper portion of the restriction member 55, and another end portion provided above a forward portion of the battery BT, and the second securer 53b includes one end portion at which the inclined portion 63 of the coupler 90 is provided, and another end portion coupled to the placement base 54.

With the battery mount 50 according to item 2 above, the effective length of the securing assembly 53 can be changed by adjusting the position at which the securers 53a and 53b are coupled to each other along the inclination direction.

(Item 3) The battery mount according to item 2, wherein the second securer 53b is bent at an intermediate portion 53c, and a portion of the second securer 53b that extends from the intermediate portion 53c to the one end portion defines the inclined portion 63 extending in the inclination direction.

With the battery mount 50 according to item 3 above, using the second securer 53b makes it possible to change the position at which the other end portion (forward end portion) of the first securer 53a is coupled to the inclined portion 63, which extends from the intermediate portion 53c to the one end portion of the second securer 53b, relative to the inclined portion 63. This makes it possible to easily change the effective length of the securing assembly 53.

(Item 4) The battery mount 50 according to any one of items 1 to 3, wherein the restriction member 55 extends from the placement base 54 to a position higher than the battery BT, the one end portion of the first securer 53a is coupled to the upper portion of the restriction member 55 such that the first securer 53a is swingable in an up-down direction, and the other end portion of the second securer 53b is coupled to the placement base 54 such that the second securer 53b is swingable in a front-rear direction of the battery BT.

With the battery mount 50 according to item 4 above, the first securer 53a swingable in the up-down direction is provided at the upper portion of the restriction member 55, and the second securer 53b swingable in the front-rear direction of the battery BT is provided. This enables easy changing of the effective length of the securing assembly 53 to thus apply a pressing force on the upper and forward surfaces of the battery BT. It follows that a frictional force can be generated on two faces, i.e., the bottom surface and the rear surface, of the battery BT.

(Item 5) The battery mount 50 according to any one of items 1 to 4, wherein the retention member 52 is configured to move along the inclined portion 63 to change the position at which the other of the first securer 53a and the second securer 53b is coupled to the inclined portion 63 relative to the inclined portion 63.

With the battery mount 50 according to item 5 above, the presence of the retention member 52 makes it possible to change the position at which the other of the first securer 53a and the second securer 53b is coupled to the inclined portion 63 relative to the inclined portion 63. This makes it possible to easily change the effective length of the securing assembly 53.

(Item 6) The battery mount 50 according to any one of items 1 to 5, wherein the other of the first securer 53a and the second securer 53b includes an inclined surface 74 inclined in a direction crossing the inclination direction, and the retention member 52 is configured to abut the inclined surface 74 to retain the position at which the other of the first securer 53a and the second securer 53b is coupled to the inclined portion 63 relative to the inclined portion 63.

With the battery mount 50 according to item 6 above, the presence of the retention member 52 that abuts the inclined surface 74 makes it possible to retain the position at which the other of the first securer 53a and the second securer 53b is coupled to the inclined portion 63 relative to the inclined portion 63.

(Item 7) The battery mount 50 according to any one of items 1 to 6, wherein the inclined portion 63 includes a thread groove 65, and the retention member 52 includes a fastener 77 to be screwed into the thread groove 65.

With the battery mount 50 according to item 7 above, the inclined portion 63 includes the thread groove 65, and the fastener 77 to be screwed into the thread groove 65 is provided as the retention member 52. This makes it possible to not only retain the position at which the other of the first securer 53a and the second securer 53b is coupled to the inclined portion 63 relative to the inclined portion 63, but also easily change the effective length of the securing assembly 53.

(Item 8) The battery mount 50 according to any one of items 1 to 7, wherein the securing assembly 53 is located inside of the battery BT on the placement base 54 in a width direction of the battery BT.

With the battery mount 50 according to item 8 above, the securing assembly 53 is provided inside of the battery BT in the width direction. This configuration makes the battery mount 50 compact in the width direction, and enables its installation without the need for a large space.

(Item 9) The battery mount 50 according to item 8, wherein the securing assembly 53 is a single securing assembly located inside of the battery BT on the placement base 54 in the width direction of the battery BT.

With the battery mount 50 according to item 9 above, only a single securing assembly 53 is provided inside of the battery BT in the width direction. Thus, the operation required for fastening or the like need only be performed only once. This enables quick securing of the battery BT.

(Item 10) The battery mount 50 according to any one of items 1 to 9, further including a clamp member 69 extending between the upper surface of the battery BT and the first securer 53a and between the forward surface of the battery and the second securer 53b, wherein the clamp member 69 is configured such that the first securer 53a causes the clamp member 69 to press the upper surface of the battery BT downward, and the second securer 53b causes the clamp member 69 to press the forward surface of the battery BT rearward.

With the battery mount 50 according to item 10 above, the presence of the clamp member 69 allows a pressing force to be evenly transmitted, from the securing assembly 53 that swings, to the upper surface of the battery BT to thus appropriately press the battery BT.

(Item 11) The battery mount 50 according to any one of items 1 to 10, further including a force transmission member 72 provided between the securing assembly 53 and the battery BT to transmit a pressing force exerted by the securing assembly 53 to the battery BT.

With the battery mount 50 according to item 11 above, a force transmitted to the force transmission member 72 can be appropriately applied to the battery BT as a pressing force.

(Item 12) The battery mount 50 according to any one of items 1 to 11, wherein the securing assembly 53 is configured to directly or indirectly abut an upper forward corner portion 92 of the battery BT to apply a rearward and downward pressing force to the battery BT.

With the battery mount 50 according to item 12 above, a force is directly or indirectly transmitted from the securing assembly 53 to the upper forward corner portion 92 of the battery BT. This allows a pressing force to be appropriately applied to the battery BT by means of a simple hardware configuration with no force transmission member 72 or clamp member 69 used.

(Item 13) A working machine 1 including the battery mount 50 according to any one of items 1 to 12.

With the working machine 1 according to item 13 above, it is possible to provide a working machine 1 that achieves the specific effect(s) mentioned above.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: working machine

- 50: battery mount
- 52: retention member
- 53: securing assembly
- 53a: first securer
- 53b: second securer
- 54: placement base
- 55: restriction member
- 63: inclined portion
- 65: thread groove
- 67: pressing member
- 72: force transmission member
- 74: inclined surface
- 77: fastener
- 90: coupler
- 91: rib member
- 92: upper forward corner portion
- BT: battery

## Claims

1. A battery mount comprising:
a placement base for placement of a battery;
a restriction member to restrict rearward movement of the battery, the restriction member being provided at the same side of the battery as a rear surface of the battery; and
a securing assembly to secure the battery, the securing assembly extending from a position above the restriction member or from an upper portion of the restriction member to a forward surface of the battery; wherein
the securing assembly includes:
a first securer provided at the same side of the battery as an upper surface of the battery;
a second securer provided at the same side of the battery as the forward surface of the battery; and
a coupler to couple the first securer and the second securer to each other; and
the coupler includes:
an inclined portion provided in one of the first securer and the second securer, the inclined portion being inclined in an inclination direction such that a distance between the inclined portion and the rear surface of the battery decreases in an upward direction; and
a retention member to retain a position at which the other of the first securer and the second securer is coupled to the inclined portion such that the position relative to the inclined portion is adjustable.

2. The battery mount according to claim 1, wherein
the first securer includes one end portion coupled to the position above the restriction member or to the upper portion of the restriction member, and another end portion provided above a forward portion of the battery; and
the second securer includes one end portion at which the inclined portion of the coupler is provided, and another end portion coupled to the placement base.

3. The battery mount according to claim 2, wherein the second securer is bent at an intermediate portion, and a portion of the second securer that extends from the intermediate portion to the one end portion defines the inclined portion extending in the inclination direction.

4. The battery mount according to claim 3, wherein
the restriction member extends from the placement base to a position higher than the battery,
the one end portion of the first securer is coupled to the upper portion of the restriction member such that the first securer is swingable in an up-down direction; and
the other end portion of the second securer is coupled to the placement base such that the second securer is swingable in a front-rear direction of the battery.

5. The battery mount according to claim 1, wherein the retention member is configured to move along the inclined portion to change the position at which the other of the first securer and the second securer is coupled to the inclined portion relative to the inclined portion.

6. The battery mount according to claim 5, wherein
the other of the first securer and the second securer includes an inclined surface inclined in a direction crossing the inclination direction; and
the retention member is configured to abut the inclined surface to retain the position at which the other of the first securer and the second securer is coupled to the inclined portion relative to the inclined portion.

7. The battery mount according to claim 6, wherein
the inclined portion includes a thread groove; and
the retention member includes a fastener to be screwed into the thread groove.

8. The battery mount according to claim 1, wherein the securing assembly is located inside of the battery on the placement base in a width direction of the battery.

9. The battery mount according to claim 8, wherein the securing assembly is a single securing assembly located inside of the battery on the placement base in the width direction of the battery.

10. The battery mount according to claim 1, further comprising a clamp member extending between the upper surface of the battery and the first securer and between the forward surface of the battery and the second securer; wherein
the clamp member is configured such that the first securer causes the clamp member to press the upper surface of the battery downward, and the second securer causes the clamp member to press the forward surface of the battery rearward.

11. The battery mount according to claim 1, further comprising a force transmission member provided between the securing assembly and the battery to transmit a pressing force exerted by the securing assembly to the battery.

12. The battery mount according to claim 1, wherein the securing assembly is configured to directly or indirectly abut an upper forward corner portion of the battery to apply a rearward and downward pressing force to the battery.

13. A working machine comprising the battery mount according to any one of claims 1 to 12.
